Europäisches Patentamt

European Patent Office

Office européen des brevets

(19)

(11) **EP 0 554 633 B1**

(12) **FASCICULE DE BREVET EUROPEEN**

(45) Date de publication et mention
de la délivrance du brevet:
**18.12.1996 Bulletin 1996/51**

(51) Int Cl.6: **G01C 21/20**, G01S 5/14

(21) Numéro de dépôt: **92403154.5**

(22) Date de dépôt: **24.11.1992**

(54) **Localisation d'un véhicule terrestre combinant la navigation à l'estime et la navigation par radio**

Landfahrzeuglokalisierung durch Kombinieren von Koppelnavigation und Radionavigation

Localisation of a land vehicle combining dead reckoning and radio navigation

(84) Etats contractants désignés:
**DE ES GB IT SE**

(30) Priorité: **26.11.1991 FR 9114544**

(43) Date de publication de la demande:
**11.08.1993 Bulletin 1993/32**

(73) Titulaire: **REGIE NATIONALE DES USINES
RENAULT S.A.**
**92109 Boulogne Billancourt (FR)**

(72) Inventeurs:
• **Crosnier, Sabine**
**F-75018 Paris (FR)**

• **Vilge, Pascal**
**F-92310 Sevres (FR)**

(56) Documents cités:
WO-A-84/01823          FR-A- 2 532 078
FR-A- 2 650 886         US-A- 4 903 212
US-A- 5 058 023

• PATENT ABSTRACTS OF JAPAN vol. 10, no. 358
(P-522)(2415) 2 Décembre 1986 & JP-A-61
155813
• PATENT ABSTRACTS OF JAPAN vol. 15, no. 270
(P-1225)(4798) 9 Juillet 1991 & JP-A-3090814

## Description

L'invention se rapporte au domaine technique de l'aide à la navigation des véhicules terrestres, notamment des véhicules automobiles. Plus précisément, elle concerne un procédé et un dispositif reposant sur le couplage d'informations de navigation à l'estime élaborées de façon autonome par le véhicule en déplacement au moyen d'organes de mesure et de calcul intégrés sur celui-ci, avec des informations de localisation captées par radio.

On distingue aujourd'hui deux types principaux de systèmes de localisation :

- les systèmes de guidage qui permettent à un conducteur de se diriger vers une destination, préalablement indiquée au système, au moyen d'indications de changements de direction, et

- les systèmes de localisation automatique, couplés avec un moyen de communication qui permet d'envoyer périodiquement "les coordonnées du véhicule vers un poste de contrôle. Ces systèmes sont particulièrement utiles pour gérer des flottes de véhicules.

Avec ces deux types de systèmes, il est souhaitable d'obtenir une précision de localisation inférieure à 100 m. Pour parvenir à ce résultat en limitant au maximum le coût et la complexité des matériels embarqués sur le véhicule, trois catégories de dispositifs ont été développés : des dispositifs de navigation autonome, des dispositifs basés sur l'infrastructure et des dispositifs de radio localisation.

Les dispositifs de navigation autonome sont constitués essentiellement d'un ensemble de capteurs embarqués : certains dispositifs de ce type, actuellement commercialisés, incluent par exemple deux capteurs de mesure de distance, disposés sur les roues non motrices du véhicule, de façon à évaluer la distance parcourue et le changement de direction, ainsi qu'un magnétomètre mesurant en permanence le cap absolu du véhicule. Ces dispositifs ont pour principal inconvénient que les capteurs de vitesses de roues donnent des mesures imprécises , car la valeur du diamètre de roulement des roues varie au cours du temps. Etant donné que ces mesures sont intégrées pour calculer la distance parcourue et la variation du cap, les résultats sont entachés d'une erreur croissante. Quant au compas, il fournit une valeur de cap correcte en moyenne, mais il peut être fortement perturbé par des phénomènes électromagnétiques, par exemple lors d'un passage sur un pont métallique. Les valeurs de cap indiquées sont alors inexploitables. Pour les différentes raisons énoncées, les systèmes de navigation autonome nécessitent des recalages périodiques, par comparaison à une carte stockée sur une mémoire de masse dans le véhicule. Mais lorsque le véhicule est hors de la zone cartographiée, le recalage sur carte ne peut pas compenser les erreurs de localisation, et l'utilisateur doit alors se relocaliser manuellement. Enfin, des erreurs de digitalisation du réseau routier ne sont pas à exclure, ce qui oblige alors le conducteur à recaler périodiquement son véhicule.

Les dispositifs basés sur l'infrastructure utilisent un réseau de balises permettant de quadriller une zone géographique. Ces balises disposent d'un système de communication courte portée, par exemple infrarouges ou hyperfréquences. Chaque fois que le véhicule passe devant une balise, la position de la balise (et donc sa position à quelques mètres près) lui est transmise. Entre deux balises, le véhicule se positionne à partir d'un dispositif de navigation autonome. L'inconvénient de tels dispositifs est qu'ils nécessitent une densité de balises importante pour obtenir un positionnement précis, ce qui implique une infrastructure de coût élevé.

Les dispositifs de radio-localisation permettent de recevoir des signaux émis par des émetteurs terrestres ou des satellites et de mesurer le temps de propagation entre des balises ou des satellites de positions connues et le véhicule. Le lieu des différences de temps de propagation par rapport à deux émetteurs étant une hyperbole, si l'on dispose de trois émetteurs (ou satellites) identifiés, on peut obtenir la position du véhicule à tout instant, par intersection des deux hyperboles obtenues. Parmi les systèmes de radio-localisation utilisés à ce jour on peut citer le système Loran C et le Global Positioning System ou système GPS : le premier est un système à vocation essentiellement maritime, ce qui limite de fait son utilisation aux régions côtières, tandis que le second est un système de radio-localisation hyperbolique par satellites dont la couverture est mondiale, nécessitant la présence de trois satellites en vue directe du véhicule. Or, en milieu urbain, il est fréquent que des immeubles élevés bloquent la visibilité des satellites, empêchant de déterminer les points GPS.

Pour palier les inconvénients inhérents à ces dispositifs, différentes solutions ont été envisagées. Parmi celles-ci, on peut citer le procédé de guidage proposé par la publication EP 0.061.674. Ce document propose l'utilisation conjointe d'un système de navigation autonome à l'aide de capteurs de vitesse de roues et compas d'orientation, et d'un moyen de radio-localisation : la position donnée par le système de radio-localisation est utilisée lorsqu'elle est disponible. En revanche, lorsque le signal radio disparaît, on exploite la position à l'estime déterminée par le système de navigation autonome. Ce dispositif présente notamment l'inconvénient d'utiliser un compas, organe toujours très sensible aux perturbations.

Par la publication FR 2.532.078, on connaît un autre procédé de guidage de véhicule, reposant sur l'utilisation conjointe d'un système de navigation autonome à l'aide de capteurs de vitesse relative placés sur les roues directrices, la différence entre les signaux par unité de temps fournissant une mesure de changement de direction du véhicule et d'un système de radio-localisation utilisé à de courts intervalles de temps. Un tel système, reposant sur le calcul de la position de navigation relative du véhicule par rapport à son point de départ sans utiliser de compas, ne présente pas l'inconvénient précité. Cependant, il ne permet d'effectuer ces recalages que dans les secteurs où le système de radio-localisation du véhicule est efficace.

L'invention a pour objet un dispositif et un procédé de localisation par couplage d'informations de navigation à l'estime et d'informations par radio qui ne présente pas ce dernier inconvénient.

Elle concerne un procédé d'aide à la navigation d'un véhicule terrestre consistant à combiner des premières informations ou informations de navigation, permettant de calculer point par point le cap et la position de navigation du véhicule par rapport à une position de départ, avec des secondes informations ou informations de localisation captées par radio permettant de déterminer directement la position absolue (X, Y) du véhicule en certains de ces points, en vue de recaler en temps réel le cap et la position du véhicule sur l'ensemble des points de navigation. Ce procédé est caractérisé en ce qu'on calcule pour chaque point de navigation, sa position de navigation absolue $(X_n, Y_n)$ à partir de sa position de navigation relative $(x_n, y_n)$ en effectuant le changement de repère correspondant, à l'aide des paramètres de changement de repère (Xo, Yo, θo) au point de départ considéré pour compenser les erreurs inhérentes au calcul des coordonnées de navigation relatives $(x_n, y_n)$ par un recalage des paramètres de changement de repère (Xo, Yo, θo).

Selon un mode de réalisation de l'invention, les informations de navigation sont fournies par un capteur de vitesse de roue gauche et par un capteur de vitesse de roue droite du véhicule.

Selon un mode de réalisation de l'invention, la distance parcourue par le véhicule à partir d'une position de départ est calculée en faisant la moyenne des vitesses de roue gauche et droite, intégrées sur la période de mesure.

Selon un mode de réalisation de l'invention, la variation de cap à partir d'une position de départ est obtenue en faisant la différence des vitesses gauche et droite divisées par la voie du véhicule, intégrées sur la période de mesure.

Selon un mode de réalisation de l'invention, la détermination directe de la position radio absolue (X, Y) du véhicule en certains des points de navigation est exploitée pour corriger la dérive cumulée sur la position absolue de navigation $(X_n, Y_n)$ en compensant les erreurs inhérentes au calcul des coordonnées de navigation relative $(x_n, y_n)$ par un recalage des paramètres de changement de repère (Xo, Yo, θo).

Selon un mode de réalisation de l'invention, les paramètres de changement de repère (Xo, Yo, θo) sont recalés de manière telle que l'erreur quadratique entre les N derniers points localisés par radio (X, Y) et les points de navigation absolue $(X_n, Y_n)$ correspondants soit minimisée.

Selon un mode de réalisation de l'invention, N = 10.

Selon un mode de réalisation de l'invention, les informations de localisation par radio sont obtenues à l'aide d'un récepteur de type "Global Positioning System" (G.P.S.).

L'invention concerne également un dispositif de navigation pour la mise en oeuvre d'un procédé conforme à l'une quelconque des revendications précédentes, caractérisé en ce qu'il comporte une antenne de réception GPS, disposée sur la partie supérieure du véhicule, un capteur de vitesse de roue gauche et un capteur de vitesse de roue droite, transmettant leurs informations respectives à une unité centrale de traitement, dont la sortie est connectée à un module applicatif.

Selon un mode de réalisation de l'invention, l'unité centrale de traitement comporte d'une part un module de réception de signal d'antenne, relié à un module de décodage des données G.P.S., lui-même relié un module de calcul des positions GPS et d'autre part un module de navigation auquel sont reliées deux capteurs de vitesse, le module de couplage GPS-navigation, grâce auquel la position et le cap du véhicule sont transmises à un module applicatif, utilisant l'information de position.

L'invention sera mieux comprise à la lecture de la description suivante d'un mode de réalisation particulier de celle-ci, en liaison avec les dessins annexés sur lesquels :

- la figure 1 représente schématiquement l'implantation du dispositif de l'invention sur le véhicule,

- la figure 2 précise la constitution de l'unité centrale ,

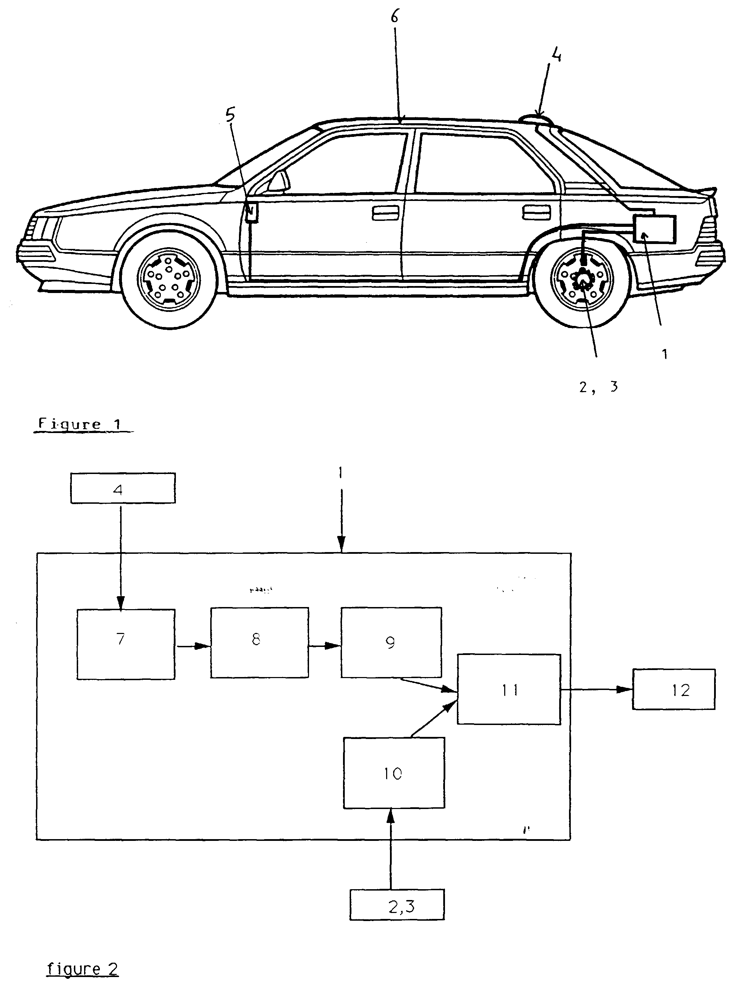

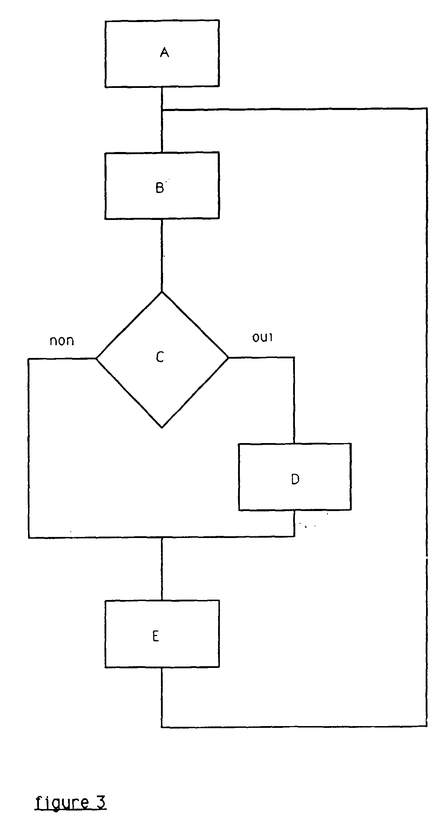

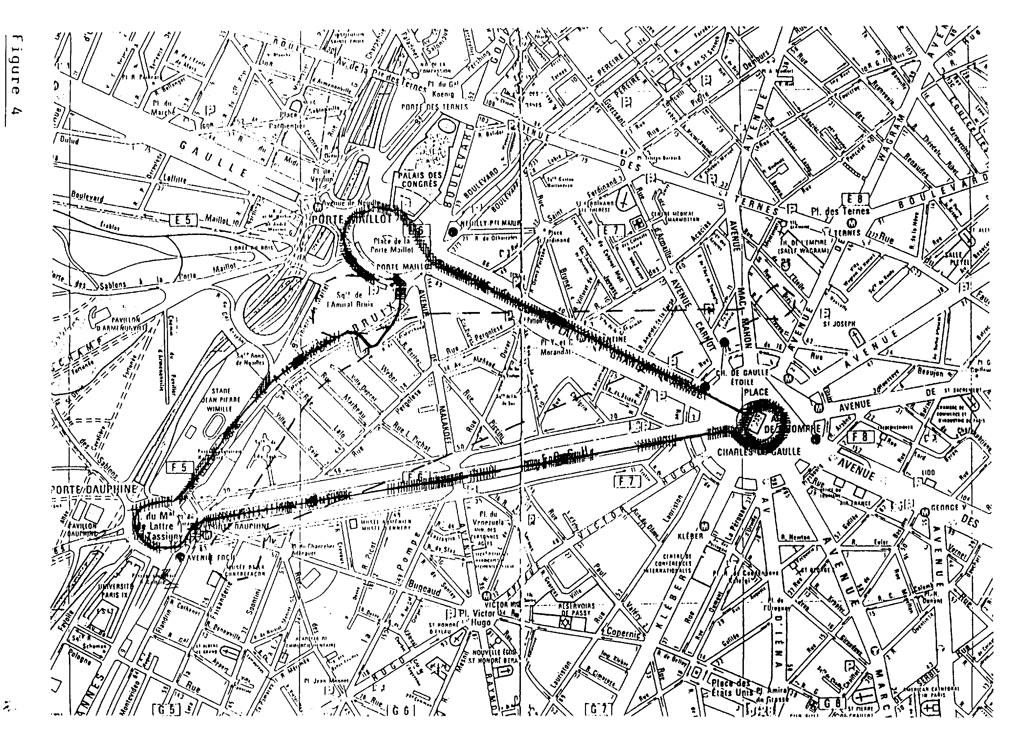

- le diagramme de la figure 3 décrit le fonctionnement du système,

- la figure 4 illustre le recalage d'une trajectoire obtenue en mettant en oeuvre l'invention sur un circuit urbain.

Le dispositif de l'invention, illustré par la figure 1, comporte une antenne de réception 4 située sur un point élevé du véhicule 6 de façon à obtenir une visibilité omnidirectionnelle des satellites. L'antenne 4 aura de préférence une forme aplatie, de façon à ne pas perturber l'aérodynamique du véhicule. Avantageusement elle sera compatible avec le système mondial de détermination de position G.P.S. ou "Global positioning system". Le GPS est un système destiné à la navigation des véhicules spatiaux, aériens, maritimes et terrestres, qui n'est pas encore totalement opérationnel aujourd'hui. C'est un système de radio-navigation par satellites, destiné à donner en permanence la position du récepteur de l'utilisateur et l'heure, quelle que soit sa position sur le globe.

Conformément à l'invention, le véhicule 6 est également équipé de capteurs de navigation autonome, 2, 3 permettant de mesurer la distance parcourue et la variation de cap entre deux instants. La solution adoptée dans l'exemple décrit, consiste à utiliser des capteurs de vitesses de roues 2, 3 placés sur l'arbre de rotation des roues non motrices, afin de limiter les erreurs dues aux glissements. Cette disposition n'est toutefois pas impérative En effet, il existe une solution alternative, consistant à mesurer la vitesse angulaire du véhicule à l'aide d'un gyromètre et à mesurer la distance parcourue par le véhicule à l'aide d'un capteur de vitesse disposé en sortie de la boîte de vitesses.

Conformément à la présente invention, la distance parcourue est obtenue en faisant la moyenne des vitesses gauche et droite intégrées sur la période de mesure.

$$D= \int (V_{gauche} + V_{droite})/2 \times dt$$

La variation de cap est obtenue en faisant la différence des vitesses gauche et droite, divisées par la voie du véhicule, intégrées sur la période de mesure.

$$\Delta\theta = \int (Vgauche - Vdroite)/Lxdt$$

On utilisera de préférence des capteurs actifs à effet Hall, permettant de mesurer des vitesses de roues très basses, plutôt que des capteurs ABS à réluctance variable, qui sont inefficaces à basse vitesse.

Dans le cas d'un véhicule équipé d'ABS ou d'ASR, un système de multiplexage du signal vitesses de roues entre le dispositif de localisation et les boîtiers ABS ou ASR sera mis en place.

L'antenne 4 et les capteurs de vitesse de roues 2, 3 sont reliés à une unité centrale 1 qui comporte comme le précise la figure 2 :

-    un module de réception du signal d'antenne 7,

-    un module de décodage 8 des trames de données GPS, en sortie duquel, on obtient les pseudo-distances qui sont les distances entre l'antenne 4 et les satellites visibles,

-    un module de calcul de la position du véhicule à l'aide des pseudo-distances 9,

-    un module de navigation à l'estime 10, qui réalise l'intégration des signaux capteurs,

-    un module de couplage GPS/navigation à l'estime 11, dans lequel s'exécute un algorithme, permettant de connaître la position précise du véhicule à chaque instant.

Ce dispositif comporte en outre un module applicatif 12 qui utilise l'information de position. Il peut s'agir d'un écran qui permet à l'utilisateur de visualiser sa position sur une carte. Il peut s'agir également d'un système de guidage qui permet à l'utilisateur de recevoir des indications pour atteindre sa destination. Enfin, il peut s'agir d'un système permettant de renvoyer la position du véhicule à un centre de gestion de flotte.

Le récepteur radio 4 utilisé fournit au mieux toutes les 0,7 secondes (lorsque la réception est efficace) la position du véhicule 1 sous la forme de sa latitude et de sa longitude. Cette position est convertie aussitôt en couple de coordonnés radio absolues (X, Y) exprimé dans un référentiel tel que le référentiel Lambert utilisé en France pour graduer les cartes I.G.N.

Le calculateur 10 de navigation à l'estime peut établir, par exemple toutes les 50 millisecondes, la position de navigation relative du véhicule x , y exprimée dans le référentiel de départ du véhicule . En notant :

-    $(x_n , y_n)$ = position de navigation relative du véhicule exprimée dans le référentiel de départ,

-    $(x_n , Y_n)$ = position de navigation absolue du véhicule, exprimée dans le référentiel de Lambert,

-    X, Y = position de localisation absolue du véhicule, par radio, dans le référentiel de Lambert,

-    $Y_o$, $Y_o$, $\theta_o$ = position de départ absolue et le cap initial absolu du véhicule dans le référentiel de Lambert,

la formule de changement de repère de navigation est :

$$X_n = X_o + y_n \cos \theta o - y_n \sin \theta o$$

$$Y_n = Y_o + X_n \sin \theta o + y_n \cos \theta o$$

Le système GPS présente l'avantage de fournir des positions dont la précision est connue, inférieure à 100 m. Par contre, il présente l'inconvénient de ne pas être disponible en permanence. En effet si les satellites sont masqués par un obstacle (arbres, immeuble,...), on n'obtient plus de point GPS.

Le système de navigation à l'estime présente l'avantage de fournir en permanence des indications de position. Toutefois ces indications sont entachées d'une erreur croissante, due aux glissements des roues et à une calibration toujours inexacte de leur diamètre. L'erreur sur les capteurs se traduit par une translation et une rotation des points navigation à l'estime, par rapport à la position réelle du véhicule.

Comme indiqué plus haut, l'invention a pour objet un procédé et un dispositif permettant d'exploiter les informations reçues par radio pour recaler les parties de navigation $(x_n, Y_n)$ calculées. Ce recalage a pour caractéristique essentielle de s'effectuer en temps réel sur l'ensemble des points de navigation X, Y calculés.

Le diagramme fonctionnel de la figure 3 indique que la première opération A, nécessaire à l'application de l'invention est une initialisation de la position du véhicule. Cette opération consiste à déterminer les coordonnées initiales absolues $(X_o, Y_o)$ et le cap initial absolu $\theta_o$ du véhicule. Elle est effectuée par le module de calcul de position radio (GPS) 9. La position de navigation relative du véhicule (x, y) est ensuite calculée point par point (étape B) par intégration des vitesses de roues à partir de la position de départ, la position relative de navigation absolue étant obtenue par calcul, grâce au changement de repère suivant :

$$X_n = Xo + x_n \cos \theta_o - y_n \sin \theta o$$

$$Y_n = Yo + x_n \sin \theta o + y_n \cos \theta_o$$

Au cours du déplacement du véhicule, le dispositif de l'invention établit s'il reçoit ou non des points G.P.S (X, Y) (étape C).

- si tel est le cas, la position du véhicule est corrigée à l'aide de ces points et d'un algorithme spéciifique (étape D) avant d'être affiché (étape E)

- si tel n'est pas le cas, les points de navigation à l'estime sont affichés directement (étape E).

L'algorithme utilisé exploite les positions X, Y obtenues directement à partir des informations reçues par radio en certains points, qui constituent une bonne approximation de la position réelle et de la trajectoire du véhicule 1. Le principe de cet algorithme consiste à considérer les données de départ $(X_o, Y_o, \theta_o)$ non pas comme des constantes, mais comme des paramètres que l'on ajuste par le calcul, de manière à faire coïncider les points de navigation à l'estime avec les points correspondants, de localisation par radio, sur un nombre déterminé de ceux-ci, le réajustement des paramètres $(X_o, Y_o, \theta_o)$ en résultant, permettant de recaler l'ensemble des points de navigation à l'estime $X_n$, $Y_n$ sans "correspondants radio", sur la période considérée.

Le calcul consiste donc à minimiser sur une suite de N points de navigation GPS et de N points de navigation à l'estime correspondants, les écarts entre ces points, c'est-à-dire l'expression :

$$f = \{(X - X_n)^2 + (Y - Y_n)^2\}$$

L'algorithme consiste à calculer $(X_o, Y_o, \theta_o)$, paramètres de changement de repères de la navigation autonome, de telle manière que l'erreur quadratique f entre les points GPS et les points obtenus à partir des vitesses de roues soit minimisée. Il est ainsi possible de compenser non seulement les erreurs de position absolue mais aussi les erreurs de cap absolu, en temps réel sur l'ensemble des points de navigation.

Sur la figure 4 relative à un exemple d'application du procédé en ville, on a représenté avec un trait interrompu la trajectoire déterminée sur un circuit urbain, avec des points de navigation à l'estime non recalés. Le trait continu correspond à la trajectoire recalée conformément à l'invention et les croix correspondent aux zones de réception des informations GPS. Cette figure met notamment en évidence les interruptions de la réception GPS au cours d'un déplacement du véhicule et la dérive de la trajectoire "de navigation à l'estime", calculée sans recalage des points. Enfin on vérifie sur cet exemple que l'invention permet de recaler les points de navigation sur l'ensemble du circuit, y compris dans les secteurs où les signaux GPS ne sont pas reçus.

## Revendications

1. Procédé d'aide à la navigation d'un véhicule terrestre consistant à combiner des premières informations ou informations de navigation, permettant de calculer point par point le cap et la position de navigation du véhicule par rapport à une position de départ avec des secondes informations ou informations de localisation captées par radio permettant de déterminer directement la position absolue (X, Y) du véhicule en certains de ces points, en vue de recaler en temps réel le cap et la position du véhicule sur l'ensemble des points de navigation, caractérisé en ce qu'on calcule pour chaque point de navigation, sa position de navigation absolue $(X_n, Y_n)$ à partir de sa position de navigation relative $(x_n, y_n)$ en effectuant le changement de repère correspondant, à l'aide des paramètres de changement de repère (Xo, Yo, $\theta$o) au point de départ considéré pour compenser les erreurs inhérentes au calcul des coordonnées de navigation relatives $(x_n, y_n)$ par un recalage des paramètres de changement de repère (Xo, Yo, $\theta$o).

2. Procédé d'aide à la navigation selon la revendication 1, caractérisé en ce que les informations de navigation sont fournies par un capteur de vitesse de roue gauche (3) et par un capteur de vitesse de roue droite (2) du véhicule (6).

3. Procédé d'aide à la navigation selon la revendication 2, caractérisé en ce que la distance parcourue par le véhicule à partir d'une position de départ est calculée en faisant la moyenne des vitesses de roue gauche et droite, intégrées sur la périodes de mesure.

4. Procédé de navigation selon les revendications 2 ou 3, caractérisé en ce que la variation de cap à partir d'une position de départ est obtenue en faisant la différence des vitesses gauche et droite divisées par la voie du véhicule, intégrées sur la période de mesure.

**5.** Procédé de navigation selon l'une des revendications 1 à 4, caractérisé en ce que les paramètres de changement de repère (Xo, Yo, θo) sont recalés de manière telle que l'erreur quadratique entre les N derniers points localisés par radio (X, Y) et les points de navigation absolue $(X_n, Y_n)$ correspondants soit minimisée.

**6.** Procédé de navigation selon la revendication 5, caractérisé en ce que N = 10.

**7.** Procédé de navigation selon l'une quelconque des revendications précédentes, caractérisé en ce que les informations de localisation par radio sont obtenues à l'aide d'un récepteur de type "Global Positioning System" (G.P.S.).

**8.** Dispositif de navigation pour la mise en oeuvre d'un procédé conforme à l'une quelconque des revendications précédentes, caractérisé en ce qu'il comporte une antenne de réception GPS (4), disposée à la partie supérieure du véhicule (6), un capteur de vitesse de roue gauche (3) et un capteur de vitesse de roue droite (2), transmettant leurs informations respectives à une unité centrale de traitement (1) dont la sortie est connectée à un module applicatif (5).

**9.** Dispositif de navigation selon la revendication 8, caractérisé en ce que l'unité centrale de traitement (1) comporte d'une part un module de réception de signal d'antenne (7), relié à un module de décodage des données G.P.S. (8), lui-même relié un module de calcul des positions GPS (9) et d'autre part un module de navigation (10) auquel sont reliés deux capteurs de vitesse (2, 3) , le module de calcul de position GPS (9) et le module de navigation (10) étant tous deux reliés à un module de couplage GPS-navigation (11), grâce auquel la position et le cap du véhicule sont transmises à un module applicatif (12) utilisant l'information de position.

**10.** Dispositif de navigation selon la revendication 9, caractérisé en ce que le module applicatif (12) est un écran permettant à l'utilisateur de visualiser sa position sur une carte.

**11.** Dispositif de navigation selon la revendication 9, caractérisé en ce que le module applicatif (12) est un système de guidage qui permet à l'utilisateur, de recevoir des indications pour atteindre sa destination.

**12.** Dispositif de navigation selon la revendication 9, caractérisé en ce que le module applicatif (12) permet de renvoyer la position du véhicule à un centre de gestion de flotte.

## Patentansprüche

**1.** Verfahren zur Unterstützung der Navigation eines Landfahrzeugs, wobei erste Informationen oder Navigationsinformationen, die eine punktweise Berechnung des Kurses und der Navigationsposition des Fahrzeuges in Bezug auf eine Startposition ermöglichen, mit zweiten Informationen oder durch Funkwellen empfangenen Ortsinformationen kombiniert werden, die eine genaue direkte Positionsbestimmung (X, Y) des Fahrzeugs an bestimmten dieser Punkte ermöglichen im Hinblick auf eine Anpassung in Echtzeit des Kurses und der Position des Fahrzeugs an die Gesamtheit der Navigationspunkte, dadurch gekennzeichnet, daß für jeden Navigationspunkt seine absolute Navigationsposition $(X_n, Y_n)$ berechnet wird ausgehend von der relativen Navigationsposition $(X_n, Y_n)$ durch Berücksichtigung der Veränderung einer entsprechenden Markierung mittels Parameter der Markierungsveränderung (Xo, Yo, θo) am zugehörigen Startpunkt zur Kompensation der der Berechnung der relativen Navigationskoordinaten $(x_n, y_n)$ innewohnenden Fehler mittels einer Anpassung der Parameter der Markierungsänderung Xo, Yo, θo).

**2.** Verfahren zur Unterstützung der Navigation nach Anspruch 1, dadurch gekennzeichnet, daß die Navigationsinformationen geliefert werden von einem Geschwindigkeitsfühler (3) für ein linkes Rad und von einem Geschwindigkeitsfühler (2) für ein rechtes Rad des Fahrzeugs (6).

**3.** Verfahren zur Unterstützung der Navigation nach Anspruch 2, dadurch gekennzeichnet, daß der vom Fahrzeug zurückgelegte Weg ausgehend von der Startposition berechnet wird durch Bildung des Mittelwertes der Geschwindigkeiten des linken Rades und des rechten Rades und Integration über die Meßperiode.

**4.** Verfahren zur Navigation nach Anspruch 2 oder 3, dadurch gekennzeichnet, daß die Kursänderung ausgehend von einer Startposition erhalten wird durch Bildung der Differenz zwischen der linken und der rechten Geschwindigkeit, geteilt durch den Fahrzeugweg und Integration über die Meßperiode.

**5.** Verfahren zur Navigation nach einem der Ansprüche 1 bis 4, dadurch gekennzeichnet, daß die Parameter der Markierungsänderung (Xo, Yo, θo) derart angepasst werden, daß der quadaratische Fehler zwischen den N letzten durch Funkwellen ermittelten Punkten (X, Y) und den zugehörigen absoluten Navigationspunkten ($X_n$, $Y_n$) minimiert werden.

6. Verfahren zur Navigation nach Anspruch 5, dadurch gekennzeichnet, daß N = 10 ist.

7. Verfahren zur Navigation nach einem der vorstehenden Ansprüche, dadurch gekennzeichnet, daß die mittels Funkwellen übermittelten Ortsbestimmungsinformationen mittels eines GPS-Empfängers (Global Positioning System) erhalten werden.

8. Vorrrichtung zur Navigation zur Durchführung des Verfahrens nach einem der vorstehenden Ansprüche, dadurch gekennzeichnet, daß sie eine GPS-Empfangsantenne (4) aufweist, die in einem oberen Abschnitt des Fahrzeugs (6) vorgesehen ist, einen Geschwindigkeitsfühler (3) für ein linkes Rad und einen Geschwindigkeitsfühler (2) für ein rechtes Rad, die ihre entsprechenden Informationen einer zentralen Verarbeitungseinheit (1) zuführen, deren Ausgang mit einem Anwendungsmodul (5) verbunden ist.

9. Vorrichtung zur Navigation nach Anspruch 8, dadurch gekennzeichnet, daß die zentrale Verarbeitungseinheit (1) einerseits ein Empfangsmodul (7) für das Antennensignal aufweist, welches mit einem Dekodiermodul (8) für die GPS-Daten verbunden ist, das wiederum mit einem Rechenmodul (9) für die GPS-Positionen verbunden ist und andererseits mit einem Navigationsmodul (10) verbunden ist, mit dem die beiden Geschwindigkeitsfühler (2, 3) verbunden sind sowie das Rechenmodul (9) für die GPS-Position und das Navigationsmodul (10), die beide wiederum mit einem Kombinationsmodul (11) für die GPS-Navigation verbunden sind, so daß die Position und der Kurs des Fahrzeugs dem die Positionsinformation auswertenden Anwendungsmodul (12) zugeführt werden.

10. Vorrichtung zur Navigation nach Anspruch 9, dadurch gekennzeichnet, daß das Anwendungsmodul (12) ein Bildschirm ist zur visuellen Darstellung der Position auf einer Karte für den Benutzer.

11. Vorrichtung zur Navigation nach Anspruch 9, dadurch gekennzeichnet, daß das Anwendungsmodul (12) ein Leitsystem ist, welches es ermöglicht, daß dem Benutzer Anzeigen zur Erreichung seines Ziels anbietet.

12. Vorrichtung zur Navigation nach Anspruch 9, dadurch gekennzeichnet, daß das Anwendungsmodul (12) eine Übersendung der Fahrzeugposition an eine zentrale Flottenverwaltung ermöglicht.

**Claims**

1. Method for aiding navigation of a terrestrial vehicle, consisting of combining first information or navigational information, allowing point by point calculation of the heading and navigational position of the vehicle with respect to an initial position with second information or localisation information picked up by radio, permitting direct determination of the absolute position (X, Y) of the vehicle at certain of these points, with a view to resetting in real-time the heading and the position of the vehicle over all of the navigation points, characterised in that for each navigation point, the absolute navigation position ($X_n$, $Y_n$) is calculated from its relative navigation position ($x_n$, $y_n$) by making the corresponding change of reference using change of reference parameters (Xo, Yo, $\theta$o) at the initial position concerned to compensate for the inherent errors in the calculation of the relative navigational coordinates ($x_n$, $x_n$) by resetting the change of reference parameters (Xo, Yo, $\theta$o).

2. Method for aiding navigation according to claim 1, characterised in that the navigation information is provided by a left wheel speed sensor (3) and by a right wheel speed sensor (2) of the vehicle (6).

3. Method for aiding navigation according to claim 2, characterised in that the distance travelled by the vehicle from an initial position is calculated by finding the mean of the speeds of the left and right wheels, integrated over the period of measurement.

4. Method for aiding navigation according to claims 2 or 3, characterised in that the variation in the heading from an initial position is obtained by finding the difference in the left and right speeds, divided by the route of the vehicle, integrated over the measurement period.

5. Method of navigation according to one of claims 1 to 4, characterised in that the change of reference parameters (Xo, Yo, $\theta$o) are reset in a manner such that the quadratic error between the N first points located by radio (X, Y) and the corresponding absolute navigation points ($X_n$, $Y_n$) is minimised.

6. Method of navigation according to claim 5, characterised in that N = 10.

7. Method of navigation according to any one of the preceding claims, characterised in that the radio location data are obtained with the aid of a "Global Positioning System" (G.P.S) type receiver.

8. Navigation device for the implementation of a method in accordance with any one of the preceding claims, characterised in that it comprises a GPS receiving antenna (4), mounted on the upper part of the vehicle (6), a left wheel speed sensor (3) and a right wheel speed sensor (2) transmitting their respective information to a central processing unit (1), the output of which is connected to an application module (5).

9. Navigation device according to claim 8, characterised in that the central processing unit (1) comprises on the one hand an antenna signal receiver module (7) linked to a GPS data decoding module (8) itself linked to a GPS position calculation module (9), and on the other hand by a navigation module (10) to which two speed sensors (2, 3) are linked, the GPS positional calculation module (9) and the navigation module (10) both being linked to a GPS navigation link module (11), by virtue of which the position and the heading of the vehicle are transmitted to an application module (12) using the positional information.

10. Navigation device according to claim 9, characterised in that the application module (12) is a screen allowing the user to see his position on a map.

11. Navigation device according to claim 9, characterised in that the application module (12) is a guidance system which allows the user to receive directions in order to reach his destination.

12. Navigation device according to claim 9, characterised in that the application module (12) allows the position of the vehicle to be sent back to a traffic control centre.

Figure 1

figure 2

figure 3

Figure 4